# EUROPEAN PATENT APPLICATION

(11) **EP 4 086 322 A1**
(43) Date of publication of application: **09.11.2022**
(21) Application number: 21172550.2
(22) Date of filing: 06.05.2021
(51) Int. Cl.: C09J 7/26, C09J 7/38

(54) **MULTILAYER PRESSURE-SENSITIVE ADHESIVE FOAM TAPE**

(71) Applicant: 3M Innovative Properties Company, Saint Paul, MN 55133-3427 (US)
(72) Inventor: Konietzny, Roman, 41366 Schwalmtal (DE); Bieber, Pierre Reinhard, 40221 Düsseldorf (DE); Boehme, Achim, 40221 Düsseldorf (DE); D'Hollander, Stijn, 9100 Sint-Niklaas (BE); Giese, Maja, 41812 Erkelenz (DE); Kuhlmann, Rene, 40597 Düsseldorf (DE); Hannen, Thomas, 47807 Krefeld (DE)
(74) Representative: Vollmers, Hans-Gerd

(57) **Abstract**

A multilayer pressure-sensitive adhesive foam tape that includes: a pressure-sensitive adhesive polymeric foam layer having a first major surface and a second major surface, wherein the polymeric foam comprises: a poly(meth)acrylate derived from a (meth)acrylate-based (co)polymer component having a weight-average molecular weight (M_{w}) no greater than 500,000 g/mol and comprising at least one reactive functional group (X); and an optional additive selected from the group consisting of a density-reducing solid filler, a tackifier, a VOC scavenger, an odor absorber (particularly, activated carbon), a stabilizer, a rheological modifier, a thixotropic compound, and a combination thereof; a first pressure-sensitive adhesive skin layer adjacent the first major surface of the foam layer; and a second pressure-sensitive adhesive skin layer adjacent the second major surface of the foam layer.

## Description

### BACKGROUND

Volatile organic compounds (VOC) reduction regulations are becoming increasingly important in the development of pressure-sensitive adhesives tapes. This is particularly important for various kinds of interior applications (occupational hygiene and occupational safety) such as, e. g., in the construction market or in the automotive or electronics industries.

Known acrylate-based pressure-sensitive adhesives typically contain notable amounts of low molecular weight organic residuals, such as unreacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful.

Known acrylate-based pressure-sensitive adhesives (PSAs), if not crosslinked, also generally suffer from lack of cohesive strength and excessive tendency to flow. This aspect may render the application and processability of uncrosslinked acrylate-based pressure-sensitive adhesives particularly problematic, especially when made by a hot melt process.

The reduction of organic solvent usage in the manufacturing process of pressure-sensitive adhesives has quickly emerged as one straightforward means to reduce the overall VOC and/or FOG levels. The use of specific scavengers for organic contaminants is another alternative way to achieve reduced VOC levels. However, the solutions for reducing overall VOC levels known from the prior art are often associated with increased manufacturing complexity and production costs. Thus, what is needed is a pressure-sensitive adhesive tape that has a low VOC and/or FOG level and can be used in various kinds of interior applications, particularly in the automotive industry.

### SUMMARY OF THE DISCLOSURE

The present disclosure provides multilayer pressure-sensitive adhesive foam tapes.

The present disclosure provides a multilayer pressure-sensitive adhesive foam tape that comprises: a pressure-sensitive adhesive polymeric foam layer having a first major surface and a second major surface, wherein the polymeric foam consists essentially of: a poly(meth)acrylate derived from a (meth)acrylate-based (co)polymer component having a weight-average molecular weight (M_{w}) no greater than 500,000 grams per mole (g/mol) and comprising at least one reactive functional group (X); and an optional additive selected from the group consisting of a density-reducing solid filler, a tackifier, a VOC scavenger, an odor absorber, a stabilizer, a rheological modifier, a thixotropic compound, and a combination thereof; a first pressure-sensitive adhesive skin layer adjacent the first major surface of the foam layer; and a second pressure-sensitive adhesive skin layer adjacent the second major surface of the foam layer. Such a multilayer pressure-sensitive adhesive foam tape is advantageous because it can be used in various kinds of interior applications due to relatively low VOC and/or FOG levels.

The present disclosure further provides a multilayer pressure-sensitive adhesive foam tape comprising: a pressure-sensitive adhesive polymeric foam layer having a first major surface and a second major surface, wherein the polymeric foam comprises: a poly(meth)acrylate derived from a (meth)acrylate-based (co)polymer component having a weight-average molecular weight (M_{w}) no greater than 500,000 g/mol and comprising at least one reactive functional group (X); and activated carbon; a first pressure-sensitive adhesive skin layer adjacent the first major surface of the foam layer; and a second pressure-sensitive adhesive skin layer adjacent the second major surface of the foam layer. Such a multilayer pressure-sensitive adhesive foam tape is advantageous because it can be used in various kinds of interior applications due to relatively low VOC and/or FOG levels.

The present disclosure also provides a multilayer pressure-sensitive adhesive foam tape comprising: a pressure-sensitive adhesive polymeric foam layer having a first major surface and a second major surface, wherein the polymeric foam comprises: a poly(meth)acrylate derived from a (meth)acrylate-based (co)polymer component having a weight-average molecular weight (M_{w}) no greater than 500,000 g/mol and comprising at least one reactive functional group (X); and a tackifier; a first pressure-sensitive adhesive skin layer adjacent the first major surface of the foam layer; and a second pressure-sensitive adhesive skin layer adjacent the second major surface of the foam layer. Such a multilayer pressure-sensitive adhesive foam tape is advantageous because it can be used in various kinds of interior applications due to relatively low VOC and/or FOG levels.

The term "ethylenically unsaturated monomer units" refers to those monomer units having carbon-carbon double (or triple) bonds that may be free-radically polymerized, and includes (meth)acrylamides, (meth)acrylates, vinyl and vinyloxy groups, allyl and allyloxy groups, and acetylenic groups.

The term "(meth)acrylic acid" includes acrylic acid and methacrylic acid.

The terms "polymer" and "polymeric material" include, but are not limited to, organic homopolymers, copolymers, such as for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic, and atactic symmetries.

The term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of' is meant including, and limited to, whatever follows the phrase "consisting of." Thus, the phrase "consisting of' indicates that the listed elements are required or mandatory, and that no other elements may be present. By "consisting essentially of' is meant including any elements listed after the phrase, and limited to other elements that do not interfere with or contribute to the activity or action specified in the disclosure for the listed elements. Thus, the phrase "consisting essentially of' indicates that the listed elements are required or mandatory, but that other elements are optional and may or may not be present depending upon whether or not they materially affect the activity or action of the listed elements. Any of the elements or combinations of elements that are recited in this specification in open-ended language (e. g., comprise and derivatives thereof), are considered to additionally be recited in closed-ended language (e. g., consist and derivatives thereof) and in partially closed-ended language (e. g., consist essentially, and derivatives thereof).

The words "preferred" and "preferably" refer to embodiments of the disclosure that may afford certain benefits, under certain circumstances. However, other claims may also be preferred, under the same or other circumstances. Furthermore, the recitation of one or more preferred claims does not imply that other claims are not useful and is not intended to exclude other claims from the scope of the disclosure.

In this application, terms such as "a," "an," and "the" are not intended to refer to only a singular entity, but to include the general class of which a specific example may be used for illustration. The terms "a," "an," and "the" are used interchangeably with the term "at least one." The phrases "at least one of' and "comprises at least one of' followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

Also herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e. g., up to 50) includes the number (e. g., 50).

Also herein, the recitations of numerical ranges by endpoints include all numbers subsumed within that range as well as the endpoints (e. g., 1 to 5 includes 1, 1.5, 2, 2.75, 3, 3.80, 4, 5, etc.).

As used herein, the term "room temperature" refers to a temperature of 20 °C to 25 °C or 22 °C to 25 °C.

The term "in the range" or "within a range" (and similar statements) includes the endpoints of the stated range.

Groupings of alternative elements or embodiments disclosed herein are not to be construed as limitations. Each group member may be referred to and claimed individually or in any combination with other members of the group or other elements found therein. It is anticipated that one or more members of a group may be included in, or deleted from, a group for reasons of convenience and/or patentability. When any such inclusion or deletion occurs, the specification is herein deemed to contain the group as modified thus fulfilling the written description of all Markush groups used in the appended claims.

Reference throughout this specification to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout this specification are not necessarily referring to the same embodiment of the disclosure. Furthermore, the particular features, configurations, compositions, or characteristics may be combined in any suitable manner in one or more embodiments.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. Thus, the scope of the present disclosure should not be limited to the specific illustrative structures described herein, but rather extends at least to the structures described by the language of the claims, and the equivalents of those structures. Any of the elements that are positively recited in this specification as alternatives may be explicitly included in the claims or excluded from the claims, in any combination as desired. Although various theories and possible mechanisms may have been discussed herein, in no event should such discussions serve to limit the claimable subject matter.

### BRIEF DESCRIPTION OF THE FIGURES

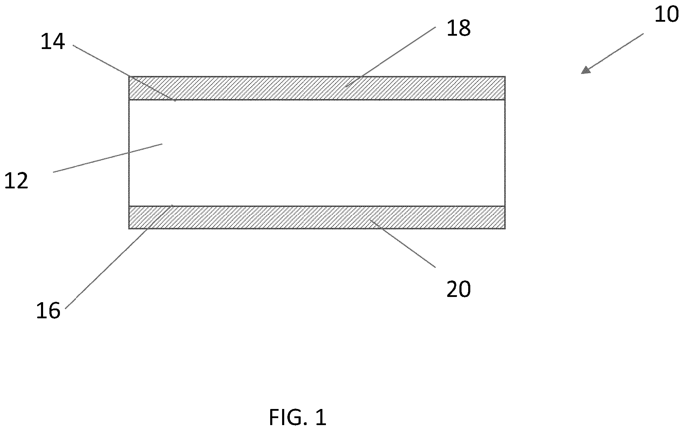

FIG. 1 is a schematic of an exemplary multilayer pressure-sensitive adhesive foam tape, wherein the layers are not to scale.

### DETAILED DESCRIPTION OF ILLUSTRATIVE EMBODIMENTS

The present disclosure provides multilayer pressure-sensitive adhesive foam tapes. Referring to Fig. 1, an exemplary multilayer foam tape 10 includes a pressure-sensitive adhesive polymeric foam layer (i. e., a core layer) 12 having a first major surface 14 and a second major surface 16, a first pressure-sensitive adhesive skin layer 18 adjacent the first major surface 14 of the foam layer 12, and a second pressure-sensitive adhesive skin layer 20 adjacent the second major surface 16 of the foam layer 12.

Preferably, the foam tapes of the present disclosure have low VOC characteristics, and more preferably, low VOC and low FOG characteristics. Such characteristics are particularly important for use in automotive interior applications.

Preferably, these foam tapes are characterized by a VOC content of less than 500 parts per million (ppm), less than 400 ppm, less than 300 ppm, less than 200 ppm, less than 100 ppm, or less than 75 ppm, according to Test Method VDA278.

Preferably, these foam tapes are characterized by a FOG content of less than 500 ppm, less than 400 ppm, less than 300 ppm, less than 200 ppm, or less than 100 ppm, according to Test Method VDA278.

Preferably, these foam tapes are characterized by a VOC content of less than 500 ppm according to Test Method VDA278, a FOG content of less than 500 ppm according to Test Method VDA278, or both. Such tapes are advantageous because they can be used in various kinds of interior applications, particularly in the automotive industry.

The polymeric foam may consist essentially of (or consist of): a poly(meth)acrylate derived from a (meth)acrylate-based (co)polymer component having a weight-average molecular weight (M_{w}) no greater than 500,000 g/mol and comprising at least one reactive functional group (X); and an optional additive selected from the group consisting of a density-reducing solid filler, a tackifier, a VOC scavenger, an odor absorber, a stabilizer, a rheological modifier, a thixotropic compound, and a combination thereof.

Alternatively, the polymeric foam may include: a poly(meth)acrylate derived from a (meth)acrylate-based (co)polymer component having a weight-average molecular weight (M_{w}) no greater than 500,000 g/mol and comprising at least one reactive functional group (X); and activated carbon.

Alternatively, the polymeric foam may include: a poly(meth)acrylate derived from a (meth)acrylate-based (co)polymer component having a weight-average molecular weight (M_{w}) no greater than 500,000 g/mol and comprising at least one reactive functional group (X); and a tackifier.

### Polymeric Foam Layer

In the context of the present disclosure, the term "polymeric foam" is meant to designate an organic polymeric foam, i. e., a composite of a polymer matrix (i. e., polymeric component) and a gas dispersed therein, typically in bubbles or cells. During foam volumetric expansion, a gas phase is initially dispersed into a continuous polymeric phase. A polymeric foam can be prepared mechanically (e. g., by air dispersion), physically (e. g., by gas injection, bead foaming, expandable microspheres), or chemically (e. g., by using a foaming agent that generates effective gases through thermal decomposition).

Such foamed compositions typically include closed cell foams although open cell foams are also possible. Preferably, the foams include closed cells, optionally with open cells and/or ruptured cells, wherein the material comprises voids, typically in an amount of at least 5 % by volume, typically 10 percent (%) to 55 % by volume, or 15 % to 45 % by volume, or 20 % to 45 % by volume.

In preferred embodiments, the polymeric foam layer may have a density of at least 0.30 grams per cubic centimeter (g/cm³), at least 0.45 g/cm³, at least 0.50 g/cm³, at least 0.60 g/cm³, or at least 0.70 g/cm³. In preferred embodiments, the polymeric foam layer may have a density of up to 1.5 g/cm³, up to 1.10 g/cm³, up to 0.95 g/cm³, or up to 0.95 g/cm³. This density, which is typically achieved by including voids or cells, can be measured according to ASTM D3575-14 ("Standard Test Methods for Flexible Cellular Materials Made from Olefin Polymers" using a pycnometer (DELTARANGE Model AG204 from Mettler-Toledo, LLC, Columbus, OH, USA) and density calculated using Archimedes" Principal).

Typically, the (meth)acrylate-based (co)polymer component has a weight-average molecular weight (M_{w}) of no greater than 500,000 g/mol. Preferably, the (meth)acrylate-based (co)polymer component has a weight-average molecular weight (M_{w}) of no greater than 480,000 g/mol, no greater than 450,000 g/mol, no greater than 420,000 g/mol, no greater than 400,000 g/mol, no greater than 380,000 g/mol, no greater than 350,000 g/mol, no greater than 320,000 g/mol, no greater than 300,000 g/mol, no greater than 290,000 g/mol, no greater than 280,000 g/mol, no greater than 270,000 g/mol, no greater than 260,000 g/mol, or even no greater than 250,000 g/mol.

In preferred embodiments, the (meth)acrylate-based (co)polymer component may have a weight-average molecular weight (Mw) of at least 5,000 g/mol, at least 10,000 g/mol, at least 50,000 g/mol, at least 80,000 g/mol, at least 100,000 g/mol, at least 120,000 g/mol, at least 150,000 g/mol, at least 180,000 g/mol, at least 200,000 g/mol, or at least 220,000 g/mol.

Unless otherwise specified, the weight-average molecular weight (M_{w}) of the (meth)acrylate-based (co)polymeric component is determined by conventional gel permeation chromatography (GPC) using appropriate techniques well known to those skilled in the art.

Preferably, the (meth)acrylate-based (co)polymer component comprises at least one functional group (X) selected from the group consisting of a carboxylic acid, a hydroxyl, an amine, an aziridine, an azetidine, a pyrrolidine, a piperidine, a carbodiimide, an isocyanate, an epoxide, an acid anhydride, an amide, and a combination thereof. More preferably, the at least one functional group (X) is selected from the group consisting of a carboxylic acid, a hydroxyl, an amine, and a combination thereof. Even more preferably, the at least one functional group (X) is a carboxylic acid.

In preferred embodiments, the (meth)acrylate-based (co)polymer component further includes at least one free-radical curable functional group (Z), which is different from the at least one reactive functional group (X). According to an advantageous aspect, the free-radical curable functional group (Z) for use herein is selected from the group consisting of Norrish type (I) free-radical curable functional groups, Norrish type (II) free-radical crosslinkable functional groups, and any combinations or mixtures thereof. According to a more advantageous aspect, the free-radical curable functional group (Z) is selected from the group consisting of Norrish type (II) free-radical curable functional groups, in particular from the group consisting of benzophenones, substituted benzophenones, benzyl formates, thioxanthones, and any combinations or mixtures thereof. According to an even more advantageous aspect, the free-radical curable functional group (Z) is selected from the group consisting of Norrish type (II) free-radical curable functional groups, in particular from the group consisting of benzophenones, substituted benzophenones, and any combinations or mixtures thereof.

In preferred embodiments, the (meth)acrylate-based (co)polymer component comprises the (co)polymerization reaction product of a (co)polymerizable material comprising: (i) C₁-C₃₂ (meth)acrylic acid ester monomer units; (ii) ethylenically unsaturated monomer units comprising the reactive functional group (X), and which is copolymerizable with monomer units (i); and (iii) optionally, ethylenically unsaturated monomer units which are copolymerizable with monomer units (i) and/or (ii), and which comprise a free-radical curable functional group (Z). Such components are advantageous because they can form a pressure-sensitive adhesive foam tape, which is advantageous because it can be used in various kinds of interior applications due to relatively low VOC and/or FOG levels.

In preferred embodiments, the (meth)acrylate-based (co)polymer component comprises the (co)polymerization reaction product of a (co)polymerizable material comprising: (i) C₁-C₃₂ (meth)acrylic acid ester monomer units; (ii) ethylenically unsaturated monomer units comprising the reactive functional group (X), and which is copolymerizable with monomer units (i); and (iii), ethylenically unsaturated monomer units which are copolymerizable with monomer units (i) and/or (ii), and which comprise a free-radical curable functional group (Z).

Preferably, the C₁-C₃₂ (meth)acrylic acid ester monomer units (i) are selected from the group consisting of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, C₄-C₃₀ (meth)acrylic acid ester monomer units, C₄-C₁₄ (meth)acrylic acid ester monomer units, and C₄-C₉ (meth)acrylic acid ester monomer units. More preferably, the C₁-C₃₂ (meth)acrylic acid ester monomer units (i) are selected from the group consisting of C₄-C₃₀ (meth)acrylic acid ester monomer units, C₄-C₁₄ (meth)acrylic acid ester monomer units, and C₄-C₉ (meth)acrylic acid ester monomer units. Even more preferably, the C₁-C₃₂ (meth)acrylic acid ester monomer units (i) are selected from the group consisting of C₄-C₉ (meth)acrylic acid ester monomer units. Even more preferably, the C₁-C₃₂ (meth)acrylic acid ester monomer units (i) are selected from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and a combination thereof. Even more preferably, the C₁-C₃₂ (meth)acrylic acid ester monomer units (i) are selected from the group consisting of isooctyl acrylate, 2-ethylhexyl acrylate, and a combination thereof.

Preferably, the ethylenically unsaturated monomer units (ii) having the reactive functional group (X) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and a combination thereof. More preferably, the ethylenically unsaturated monomer units (ii) having the reactive functional group (X) are selected from the group consisting of (meth)acrylic acid monomers, in particular acrylic acid monomers, and a combination thereof.

Preferably, the (co)polymerizable material of the (meth)acrylate-based (co)polymer component includes ethylenically unsaturated monomer units (iii) which are copolymerizable with monomer units (i) and/or (ii), and which comprise a free-radical curable functional group (Z). More preferably, the ethylenically unsaturated monomer units (iii) are selected from the group consisting of C₁-C₁₈ (meth)acrylic acid ester monomer units. Even more preferably, the ethylenically unsaturated monomer units (iii) are selected from the group consisting of C₁-C₁₈ methacrylic acid ester monomer units comprising a free-radical curable functional group (Z) selected from the group consisting of Norrish type (II) free-radical curable functional groups (e. g., in particular from the group consisting of benzophenones, substituted benzophenones, benzyl formates, thioxanthones, and a combination thereof). Even more preferably, the ethylenically unsaturated monomer units (iii) are selected from the group consisting of C₁-C₁₈ methacrylic acid ester monomer units comprising a free-radical curable functional group (Z) selected from the group consisting of benzophenones, substituted benzophenones, and any combinations or mixtures thereof.

Typically, the (meth)acrylate-based (co)polymer component is present in the polymeric foam layer in an amount of at least 25 weight percent (wt-%), based on the total weight of the foamable composition (prior to foaming). Only 25 wt-% of the (meth)acrylate-based (co)polymer component is needed if blended with high amounts of fillers that contribute to thermal stability. In preferred embodiments, (meth)acrylate-based (co)polymer component is present in the polymeric foam layer in an amount of up to 99.5 wt-%, based on the total weight of the foamable composition (prior to foaming). Preferably, the (meth)acrylate-based (co)polymer component is present in the foam layer in an amount of 25 wt-% to 99.5 wt-%, based on the total weight of the foamable composition (prior to foaming). Such (meth)acrylate-based (co)polymer component amounts are advantageous because they can form a pressure-sensitive adhesive foam tape, which is advantageous because it can be used in various kinds of interior applications due to relatively low VOC and/or FOG levels.

The (meth)acrylate-based (co)polymer component for use in the polymeric foam layer may be prepared by processes familiar to the skilled person, with particular advantage by conventional free radical polymerizations or controlled radical polymerizations. A variety of conventional free radical polymerization methods, including solution, bulk (i. e., with little or no solvent), dispersion, emulsion, and suspension processes, which processes are familiar to the skilled person, may be used. The particular method used may be influenced by the use of the final pressure-sensitive adhesive composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

According to another advantageous aspect, the (meth)acrylate-based (co)polymer component for use in the polymeric foam layer comprises the essentially adiabatic (co)polymerization reaction product of the (co)polymerizable material. Essentially adiabatic polymerization methods using a batch reactor are described, e. g., in U.S. Pat. No. 5,637,646 (Ellis).

The polymeric foam layer further includes an optional additive selected from the group consisting of a density-reducing solid filler, a tackifier (e. g., e. g., a rosin ester, a terpene, a phenol, and an aliphatic, aromatic, or mixture of aliphatic and aromatic, synthetic hydrocarbon resin), a VOC scavenger (e. g., zeolites, guest/host compounds/complexes, cyclodextrins), an odor absorber (e. g., activated carbon), a stabilizer (e. g., hindered phenol, hindered amine), a rheological modifier, a thixotropic compound (e. g., fumed silica, carbon black), and a combination thereof.

The optional additives may be used in various combinations and in amounts sufficient to obtain the desired properties for the foam being produced. Typically, one or more such additives are present in the polymeric foam layer in an amount of at least 0.05 wt-%, based on the total weight of the foamable composition (prior to foaming). In preferred embodiments, one or more such optional additives are present in an amount of up to 15 wt-%, or up to 10 wt-%, based on the total weight of the foamable composition (prior to foaming).

In preferred embodiments, the polymeric foam layer has a thickness of at least 100 micrometers (µm or microns), at least 200 micrometers, at least 500 micrometers, or at least 800 micrometers. In preferred embodiments, the polymeric foam layer has a thickness of up to 6000 micrometers, up to 4000 micrometers, up to 2000 micrometers, or up to 1500 micrometers. As will be apparent to those skilled in the art, in the light of the present description, the preferred thickness of the polymeric foam layer will be dependent on the intended application.

### Mechanisms of Foaming Polymeric Foam Layer

In preferred embodiments, the foam layer is formed from a foamable composition that includes a foaming agent, such as a density-reducing solid filler (e. g., a hollow filler such as hollow polymeric particles, hollow glass microspheres, or hollow ceramic microspheres). A preferred such filler includes expandable microspheres. Although these are not required as other mechanisms of foaming are possible, as discussed below, if they are used, the expandable microspheres are present in an amount of up to 20 wt-%, or up to 15 wt-%, based on the total weight of the foamable composition (prior to foaming). In embodiments in which they are used, the expandable microspheres are present in an amount of at least 0.5 wt-%, based on the total weight of the foamable composition (prior to foaming).

In preferred embodiments, the expandable microspheres are heat expandable polymeric microspheres. That is, the expandable microspheres are capable of expanding in size in the presence of heat and/or radiation energy (including, for example, microwave, infrared, radiofrequency, and/or ultrasonic energy).

The expandable microspheres have a particular temperature at which they begin to expand (initial expansion temperature or To) and a second temperature at which they have reached maximum expansion (maximum expansion temperature or Tₘ). Different grades of microspheres have different onset expansion temperature and maximum expansion temperature. For example, one particularly useful microsphere has a To of 80 °C to 150 °C. The temperature at which the microspheres have reached maximum expansion (T) is desirably from 100 °C to 200 °C. Although the choice of the particular microspheres and their respective To and Tₘ is not critical, the processing temperatures may be modified depending upon these temperatures. Before the composition is fully dried, these microspheres are able to move within the composition and are able to expand. Once the composition is fully dry, however, the microspheres are substantially locked in place. The expanded composition typically has a greater than 2000 %, preferably greater than 2500 %, total volume expansion from a wet or partially dry composition.

In preferred embodiments, the expandable microspheres have a polymeric shell and a hydrocarbon core (e. g., a polyacrylonitrile shell). Suitable microspheres include, for example, heat expandable polymeric microspheres, including those having a hydrocarbon core and a polyacrylonitrile shell (such as those sold under the trade name DUALITE) and other similar expandable microspheres (such as those sold under the trade name EXPANCEL, such as EXPANCEL 043 DU 80 from Nouryon, Amsterdam, The Netherlands, and FN100MD from Lehmann & Voss, Hamburg, Germany).

The expandable microspheres may have any unexpanded size, including from 5 microns to 30 microns in diameter. In the presence of heat, the expandable microspheres of the present disclosure may be capable of increasing in diameter by 3 times to 10 times. Upon expansion of the microspheres in the composition, the composition becomes a foamed material. Alternatively, the expandable microspheres can be pre-expanded before combining with the polymer component and fully expanded without a need to undergo further expansion.

While expandable microspheres are preferred, other mechanisms of foaming can be used if desired. For example, a polymeric foam can be prepared mechanically (e. g., by air dispersion), physically (e. g., by gas injection, bead foaming, expandable microspheres), or chemically (e. g., by using a foaming agent that generates effective gases through thermal decomposition). Foaming agents other than expandable microspheres can be used including, for example, physical blowing agents or chemical blowing agents. If they are used, one or more of such foaming agents are present in an amount of up to 20 wt-%, or up to 15 wt-%, based on the total weight of the foamable composition (prior to foaming). In embodiments in which they are used, one or more of such foaming agents are present in an amount of at least 0.5 wt-%, based on the total weight of the foamable composition (prior to foaming).

A physical blowing agent useful in forming the foam layer of the present disclosure can include a wide variety of naturally occurring atmospheric materials that are vapors at the temperature and pressure at which the foam is formed. A physical blowing agent may be introduced into the polymeric component as a gas, liquid, or supercritical fluid, preferably as a liquid. A physical blowing agent is usually in a supercritical state at the conditions existing during the foaming process. If a physical blowing agent is used, it is preferable that it is soluble in the polymeric component being used. The physical blowing agents used will depend on the properties sought in the resulting foam articles. Other factors considered in choosing a blowing agent are its toxicity, vapor pressure profile, and ease of handling. Flammable blowing agents such as pentane, butane and other organic materials, such as hydrofluorocarbons (HFC) and hydrochlorofluorocarbons (HCFC) may be used, but non-flammable, non-toxic, non-ozone depleting blowing agents are preferred because they are easier to use, e. g., fewer environmental and safety concerns. Suitable physical blowing agents include, for example, carbon dioxide, nitrogen, SF₆, nitrous oxide, perfluorinated fluids, such as C₂F₆, argon, helium, noble gases, such as xenon, air (nitrogen and oxygen blend), and blends of these materials, hydrofluorocarbons (HFC) and hydrochlorofluorocarbons (HCFC).

Suitable chemical blowing agents include, for example, sodium bicarbonate and citric acid blend, dinitrosopentamethylenetetramine, p-toluenesulfonyl hydrazide, 4-4'-oxybis (benzenesulfonyl hydrazide, azodicarbonamide (1,1'-azobisformamide), meta-modified azodicarbonides, p-toluenesulfonyl semicarbazide, 5-phenyltetrazole, 5-phenyltetrazole analogues, diisopropylhydrazodicarboxylate, 5-phenyl-4-oxadiazin-2-one, and sodium borohydride. Another exemplary chemical blowing agent includes that available from Avient, Avon Lake, OH, USA, under the trade name HYDROCEROL 40 CB.

### Polymeric Skin Layers

Typically, the first pressure-sensitive adhesive skin layer, the second pressure-sensitive adhesive skin layer, or both skin layers are polymeric non-foamed layer(s).

One or both of the skin layers may include the same polymer as the core polymeric foam layer.

Preferably, one or both of the skin layers includes a polymer base material selected from the group consisting of poly(meth)acrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof. More preferably, one or both of the skin layers includes a polymer base material selected from the group consisting of poly(meth)acrylates, polyurethanes, and a combination thereof (i. e., copolymers or mixtures thereof). Even more preferably, one or both of the skin layers includes a polymer base material selected from the group consisting of poly(meth)acrylates, and a combination thereof. In such embodiments in which one or both of the skin layers includes a poly(meth)acrylate derived from a (meth)acrylate-based (co)polymer component, such component preferably has a weight-average molecular weight (Mw) no greater than 500,000 g/mol and comprising at least one reactive functional group (X).

In preferred embodiments, the first and/or second pressure-sensitive adhesive skin layers have a thickness of at least 20 micrometers, or at least 40 micrometers. In preferred embodiments, the first and/or second pressure-sensitive adhesive skin layers have a thickness of up to 250 micrometers, or up to 200 micrometers. The thickness of the various layer(s) within the pressure-sensitive adhesive assembly (i. e., foam tape) may vary in wide ranges depending on the desired execution and associated properties.

### Method of Making Multilayer Tapes

In preferred embodiments, the tapes of the present disclosure are formed from a hot melt processable polymeric composition, preferably using reactive extrusion. The expression "hot melt processable polymeric composition" is meant to designate a polymer or a blended polymeric material with a melt viscosity profile such that it can be coated on a substrate or carrier in a thin layer at a process temperature significantly above normal room temperature. As used herein, the term "reactive extrusion" is meant to refer to polymer processing and polymerization reactions performed in an extrusion equipment.

### Uses of Multilayer Tapes

The present disclosure provides the use of a multilayer pressure-sensitive adhesive foam tape according to the present disclosure for industrial applications, particularly construction market applications, and transportation market applications (e. g., automotive and aerospace applications). Specific examples of such applications include taped seal on body, taped seal on door, exterior and interior parts attachment, and weather-strip tape applications for the automotive industry. Other examples include bonding to a low surface energy substrate and/or a medium surface energy substrate, in particular automotive clear coats/paints. The present disclosure provides the use of a multilayer pressure-sensitive adhesive foam tape according to the present disclosure for electronic applications, particularly interior appliances. The use may in particular include the use for the fixation of display panels in mobile hand-held electronic devices. Preferably, the use for interior appliances include, e. g., white appliances such as refrigerators.

### EXEMPLARY EMBODIMENTS

Embodiment 1 is a multilayer pressure-sensitive adhesive foam tape comprising: a pressure-sensitive adhesive polymeric foam layer having a first major surface and a second major surface, wherein the polymeric foam consists essentially of: a poly(meth)acrylate derived from a (meth)acrylate-based (co)polymer component having a weight-average molecular weight (M_{w}) no greater than 500,000 g/mol and comprising at least one reactive functional group (X); and an optional additive selected from the group consisting of a density-reducing solid filler, a tackifier (e. g., a rosin ester, a terpene, a phenol, and an aliphatic, aromatic, or mixture of aliphatic and aromatic, synthetic hydrocarbon resin), a VOC scavenger (e. g., zeolites, guest/host compounds/complexes, cyclodextrins), an odor absorber (e. g., activated carbon), a stabilizer (e. g., hindered phenol, hindered amine), a rheological modifier, a thixotropic compound (e. g., fumed silica, carbon black), and a combination thereof; a first pressure-sensitive adhesive skin layer adjacent the first major surface of the foam layer; and a second pressure-sensitive adhesive skin layer adjacent the second major surface of the foam layer.
Embodiment 2 is a multilayer pressure-sensitive adhesive foam tape comprising: a pressure-sensitive adhesive polymeric foam layer having a first major surface and a second major surface, wherein the polymeric foam comprises: a poly(meth)acrylate derived from a (meth)acrylate-based (co)polymer component having a weight-average molecular weight (M_{w}) no greater than 500,000 g/mol and comprising at least one reactive functional group (X); and activated carbon; a first pressure-sensitive adhesive skin layer adjacent the first major surface of the foam layer; and a second pressure-sensitive adhesive skin layer adjacent the second major surface of the foam layer.
Embodiment 3 is a multilayer pressure-sensitive adhesive foam tape comprising: a pressure-sensitive adhesive polymeric foam layer having a first major surface and a second major surface, wherein the polymeric foam comprises: a poly(meth)acrylate derived from a (meth)acrylate-based (co)polymer component having a weight-average molecular weight (Mw) no greater than 500,000 g/mol and comprising at least one reactive functional group (X); and a tackifier; a first pressure-sensitive adhesive skin layer adjacent the first major surface of the foam layer; and a second pressure-sensitive adhesive skin layer adjacent the second major surface of the foam layer.
Embodiment 4 is the tape of any of embodiments 1 through 3 wherein the polymeric foam further includes a density-reducing solid filler. Embodiment 5 is the tape of embodiment 4 wherein the density-reducing solid filler is a hollow filler. Embodiment 6 is the tape of embodiment 5 wherein the hollow filler is formed from expandable microspheres. Embodiment 7 is the tape of any of embodiments 4 through 6 wherein the density-reducing solid filler is present in the foam layer in an amount of at least 0.5 wt-%, based on the total weight of the foamable composition (prior to foaming). Embodiment 8 is the tape of any of embodiments 4 through 7 wherein the density-reducing solid filler is present in the foam layer in an amount of up to 20 wt-%, based on the total weight of the foamable composition (prior to foaming).
Embodiment 9 is the tape of any of the previous embodiments wherein the (meth)acrylate-based (co)polymer component is present in the foam layer in an amount of at least 25 wt-%, based on the total weight of the foamable composition (prior to foaming). Embodiment 10 is the tape of any of the previous embodiments wherein the (meth)acrylate-based (co)polymer component is present in the foam layer in an amount of up to 99.5 wt-%, based on the total weight of the foamable composition (prior to foaming).
Embodiment 11 is the tape of any of the previous embodiments wherein the polymeric foam layer has a thickness of at least 100 micrometers, at least 200 micrometers, at least 500 micrometers, or at least 800 micrometers. Embodiment 12 is the tape of any of the previous embodiments wherein the polymeric foam layer has a thickness of up to 6000 micrometers, up to 4000 micrometers, up to 2000 micrometers, or up to 1500 micrometers.
Embodiment 13 is the tape of any of the previous embodiments wherein the polymeric foam layer has a density of at least 0.30 g/cm³, at least 0.45 g/cm³, at least 0.50 g/cm³, at least 0.60 g/cm³, or at least 0.70 g/cm³. Embodiment 14 is the tape of any of the previous embodiments wherein the polymeric foam layer has a density of up to 1.5 g/cm³, up to 1.10 g/cm³, up to 0.95 g/cm³, or up to 0.95 g/cm³.
Embodiment 15 is the tape of any of the previous embodiments wherein the polymeric foam layer comprises at least 5 % voids by volume (e. g., 10 % to 55 % by volume, 15 % to 45 % by volume, or 20 % to 45 % by volume).
Embodiment 16 is the tape of any of the previous embodiments wherein the (meth)acrylate-based (co)polymer component has a weight-average molecular weight (Mw) no greater than 480,000 g/mol, no greater than 450,000 g/mol, no greater than 420,000 g/mol, no greater than 400,000 g/mol, no greater than 380,000 g/mol, no greater than 350,000 g/mol, no greater than 320,000 g/mol, no greater than 300,000 g/mol, no greater than 290,000 g/mol, no greater than 280,000 g/mol, no greater than 270,000 g/mol, no greater than 260,000 g/mol, or even no greater than 250,000 g/mol. Embodiment 17 is the tape of any of the previous embodiments wherein the (meth)acrylate-based (co)polymer component has a weight-average molecular weight (Mw) at least 5,000 g/mol, at least 10,000 g/mol, at least 50,000 g/mol, at least 80,000 g/mol, at least 100,000 g/mol, at least 120,000 g/mol, at least 150,000 g/mol, at least 180,000 g/mol, at least 200,000 g/mol, or at least 220,000 g/mol.
Embodiment 18 is the tape of any of the previous embodiments wherein the (meth)acrylate-based (co)polymer component comprises at least one functional group (X) selected from the group consisting of a carboxylic acid, a hydroxyl, an amine, an aziridine, an azetidine, a pyrrolidine, a piperidine, a carbodiimide, an isocyanate, an epoxide, an acid anhydride, an amide, and a combination thereof. Embodiment 19 is the tape of embodiment 18 wherein the at least one functional group (X) is selected from the group consisting of a carboxylic acid, a hydroxyl, an amine, and a combination thereof. Embodiment 20 is the tape of embodiment 19 wherein the at least one functional group (X) is a carboxylic acid.
Embodiment 21 is the tape of any of the previous embodiments wherein the (meth)acrylate-based (co)polymer component further comprises at least one free-radical curable functional group (Z), which is different from the at least one reactive functional group (X).
Embodiment 22 is the tape of any of the previous embodiments wherein the (meth)acrylate-based (co)polymer component comprises the (co)polymerization reaction product of a (co)polymerizable material comprising: (i) C₁-C₃₂ (meth)acrylic acid ester monomer units; (ii) ethylenically unsaturated monomer units comprising the reactive functional group (X), and which is copolymerizable with monomer units (i); and (iii) optionally, ethylenically unsaturated monomer units which are copolymerizable with monomer units (i) and/or (ii), and which comprise a free-radical curable functional group (Z).
Embodiment 23 is the tape of embodiment 22 wherein the C₁-C₃₂ (meth)acrylic acid ester monomer units (i) are selected from the group consisting of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, C₄-C₃₀ (meth)acrylic acid ester monomer units, C₄-C₁₄ (meth)acrylic acid ester monomer units, and C₄-C₉ (meth)acrylic acid ester monomer units. Embodiment 24 is the tape of embodiment 23 wherein the C₁-C₃₂ (meth)acrylic acid ester monomer units (i) are selected from the group consisting of C₄-C₃₀ (meth)acrylic acid ester monomer units, C₄-C₁₄ (meth)acrylic acid ester monomer units, and C₄-C₉ (meth)acrylic acid ester monomer units. Embodiment 25 is the tape of embodiment 24 wherein the C₁-C₃₂ (meth)acrylic acid ester monomer units (i) are selected from the group consisting of C₄-C₉ (meth)acrylic acid ester monomer units. Embodiment 26 is the tape of embodiment 25 wherein the C₁-C₃₂ (meth)acrylic acid ester monomer units (i) are selected from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and a combination thereof. Embodiment 27 is the tape of embodiment 26 wherein the C₁-C₃₂ (meth)acrylic acid ester monomer units (i) are selected from the group consisting of isooctyl acrylate, 2-ethylhexyl acrylate, and a combination thereof.
Embodiment 28 is the tape of any of embodiments 22 through 27 wherein the ethylenically unsaturated monomer units (ii) having the reactive functional group (X) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and a combination thereof. Embodiment 29 is the tape of any of embodiments 22 through 28 wherein the ethylenically unsaturated monomer units (ii) having the reactive functional group (X) are selected from the group consisting of (meth)acrylic acid monomers, in particular acrylic acid monomers, and a combination thereof.
Embodiment 30 is the tape of any of embodiments 22 through 29 wherein the (meth)acrylate-based (co)polymer component comprises the (co)polymerization reaction product of a (co)polymerizable material comprising: (i) C₁-C₃₂ (meth)acrylic acid ester monomer units; (ii) ethylenically unsaturated monomer units comprising the reactive functional group (X), and which is copolymerizable with monomer units (i); and (iii) ethylenically unsaturated monomer units which are copolymerizable with monomer units (i) and/or (ii), and which comprise a free-radical curable functional group (Z).
Embodiment 31 is the tape of embodiment 30 wherein the ethylenically unsaturated monomer units (iii) are selected from the group consisting of C₁-C₁₈ (meth)acrylic acid ester monomer units. Embodiment 32 is the tape of embodiment 31 wherein the ethylenically unsaturated monomer units (iii) are selected from the group consisting of C₁-C₁₈ methacrylic acid ester monomer units comprising a free-radical curable functional group (Z) selected from the group consisting of benzophenones, substituted benzophenones, and any combinations or mixtures thereof.
Embodiment 33 is the tape of any of the previous embodiments wherein the polymeric foam layer is formed from a hot melt processable polymeric composition, preferably using reactive extrusion.
Embodiment 34 is the tape of any of the previous embodiments wherein the first pressure-sensitive adhesive skin layer is a polymeric non-foamed layer. Embodiment 35 is the tape of any of the previous embodiments wherein the first pressure-sensitive adhesive skin layer has a thickness of at least 20 micrometers, or at least 40 micrometers. Embodiment 36 is the tape of any of the previous embodiments wherein the first pressure-sensitive adhesive skin layer has a thickness of up to 250 micrometers, or up to 200 micrometers.
Embodiment 37 is the tape of any of the previous embodiments wherein the first pressure-sensitive adhesive skin layer comprise a polymer base material selected from the group consisting of poly(meth)acrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof. Embodiment 38 is the tape of embodiment 37 wherein the first pressure-sensitive adhesive skin layer comprises a polymer base material selected from the group consisting of poly(meth)acrylates, polyurethanes, and a combination thereof (i. e., copolymers or mixtures thereof). Embodiment 39 is the tape of embodiment 38 wherein the first pressure-sensitive adhesive skin layer comprises a polymer base material selected from the group consisting of poly(meth)acrylates, and a combination thereof. Embodiment 40 is the tape of embodiment 39 wherein the first pressure-sensitive adhesive skin layer comprises a poly(meth)acrylate derived from a (meth)acrylate-based (co)polymer component having a weight-average molecular weight (M_{w}) no greater than 500,000 g/mol and comprising at least one reactive functional group (X).
Embodiment 41 is the tape of any of the previous embodiments wherein the second pressure-sensitive adhesive skin layer is a polymeric non-foamed layer. Embodiment 42 is the tape of any of the previous embodiments wherein the second pressure-sensitive adhesive skin layer has a thickness of at least 20 micrometers, or at least 40 micrometers. Embodiment 43 is the tape of any of the previous embodiments wherein the second pressure-sensitive adhesive skin layer has a thickness of up to 250 micrometers, or up to 200 micrometers.
Embodiment 44 is the tape of any of the previous embodiments wherein the second pressure-sensitive adhesive skin layer comprise a polymer base material selected from the group consisting of poly(meth)acrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof. Embodiment 45 is the tape of embodiment 44 wherein the second pressure-sensitive adhesive skin layer comprises a polymer base material selected from the group consisting of poly(meth)acrylates, polyurethanes, and a combination thereof (i. e., copolymers or mixtures thereof). Embodiment 46 is the tape of embodiment 45 wherein the second pressure-sensitive adhesive skin layer comprises a polymer base material selected from the group consisting of poly(meth)acrylates, and a combination thereof. Embodiment 47 is the tape of embodiment 46 wherein the second pressure-sensitive adhesive skin layer comprises a poly(meth)acrylate derived from a (meth)acrylate-based (co)polymer component having a weight-average molecular weight (M_{w}) no greater than 500,000 g/mol and comprising at least one reactive functional group (X).
Embodiment 48 is the tape of any of the previous embodiments characterized by a VOC content of less than 500 ppm, less than 400 ppm, less than 300 ppm, less than 200 ppm, less than 100 ppm, or less than 75 ppm, according to Test Method VDA278. Embodiment 49 is the tape of any of the previous embodiments characterized by a FOG content of less than 500 ppm, less than 400 ppm, less than 300 ppm, less than 200 ppm, or less than 100 ppm, according to Test Method VDA278.
Embodiment 50 is the use of the tape of any of the previous embodiments for industrial applications (e. g., constructions market applications and transportation market applications) and electronic applications. Embodiment 51 is the use of the tape of any of the previous embodiments for interior appliances (e. g., refrigerators).

### EXAMPLES

These Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, Missouri, USA, or may be synthesized by conventional methods.

### Test Methods:

### 90° Peel Test at 300 mm/min (according to Test Method, Finat No. 2, 8th Edition 2009)

Multilayer pressure-sensitive adhesive assembly strips having a width of 10 millimeters (mm) and a length of greater than 120 mm were cut out in the machine direction from the sample material. Stainless steel panels (SS) were cleaned 3 times, first with heptane, then MEK, and finally heptane. For test sample preparation, the liner was first removed from the one adhesive side and placed on an aluminum strip having the following dimensions - 220 mm x 10 mm, 0.13 mm thickness. Then, the adhesive coated side of each PSA assembly strip was placed, after the liner was removed, with its adhesive side down on a clean test panel using light finger pressure. Next, the test samples were rolled twice with a standard FINAT test roller (weight 6.8 kilograms (kg)) at a speed of approximately 10 mm per second to obtain intimate contact between the adhesive mass and the surface. After applying the pressure-sensitive adhesive assembly strips to the test panel, the test samples were allowed to dwell for 24 hours (h) under ambient conditions (23 °C +/- 2 °C, 50 % relative humidity +/-5 %) prior to testing.

For peel testing, the test samples were in a first step clamped in the lower movable jaw of a Zwick tensile tester (Model Z020 commercially available from Zwick/Roell GmbH, Ulm, Germany). The multilayer pressure-sensitive adhesive film strips were folded back at an angle of 90° with their free ends grasped in the upper jaw of the tensile tester in a configuration commonly utilized for 90° measurements. The tensile tester was set at 300 millimeters per minute (mm/min) jaw separation rate. The test results are expressed in Newton per 10 mm (N/10 mm). The quoted peel values are the average of two 90°-peel measurements.

### Thermal Desorption Analysis of Organic Emissions According to VDA Test Method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅; and
FOG value - the sum of the semi-volatile and heavy compounds from n-C₁₄ to n-C₃₂.

Adhesive samples of 30 milligrams (mg) +/- 5 mg were weighed. In the case of double-sided tapes, one adhesive was covered with aluminum foil, the adhesive of interest was covered with stainless steel mesh, and the sample placed into glass sample tubes. The volatile and semi-volatile organic compounds were extracted from the samples into the gas stream and were then re-focused onto a secondary cryo trap (-150 °C) prior to injection into a gas chromatogram (GC) for analysis. An automated thermal desorber (Gerstel TDU 2 with Gerstel robotic) was used for the VDA 278 testing.

The test method comprises two extraction stages:
VOC analysis, which involved desorbing the sample at 90 °C for 30 minutes to extract VOC's up to n-C₂₅. This was followed by a semi-quantitative analysis of each compound as microgram toluene equivalents per gram of sample (µg/g).

FOG analysis, which involved desorbing the sample at 120 °C for 60 minutes to extract semi-volatile compounds ranging from n-C₁₄ to n-C₃₂. This was followed by semi-quantitative analysis of each compound as microgram hexadecane equivalents per gram of sample (µg/g).

The VOC values expressed are the average of two measurements per sample. The higher value of the measurements is indicated as the result, as described in the VDA278 test method. In order to determine the FOG value, the samples were retained in the desorption tube after the VOC analysis, returned to the thermal desorber and reheated to 120 °C for 60 minutes. The higher value of the measurements is indicated as the result.

### Raw Materials:

The raw materials and starting products used are summarized in Table 1 below.

**Table 1: Raw Materials**

| Name | Description | Supplier |
|---|---|---|
| ACX7065 | Black Acrylic foam tape with a thickness of 1200 mm. | Tesa, Hamburg, Germany |
| Aerosil R972 | Fumed silica after-treated with DDS (dimethyldichlorosilane) | Evonik, Parsippany, USA |
| AcResin 250 | A low molecular weight (approximately 250,000 g/mol) acrylic polymer containing acrylic acid and photocurable crosslinking sites. | BASF, Ludwigshafen, Germany |
| Cabosil H5 | High surface area fumed silica | Cabot, Billerica, USA |
| EMS FN100MD | Expandable microspheres | Lehmann & Voss, Hamburg, Germany |
| PGW-20MD | Activated Carbon | Kuraray, Okayama, Japan |
| Superester W115 | Rosin ester tackifier resin with a softening point of 115°C | Arakawa Europe, Eschborn, Germany |

### Examples:

The exemplary pressure-sensitive adhesives were prepared according to the following procedure.

### First and/or second pressure-sensitive adhesive layer(s) preparation ("skin layer").

Pressure-sensitive skin adhesive formulations with compositions as described in Table 2 were compounded in a 26-mm co-rotating twin screw extruder (ZSK26 from Coperion GmbH, Stuttgart, Germany) having 15 heat zones and a L/D (length/diameter) ratio of 60. The extruder was operated at 350 revolutions per minute (rpm) and a throughput of 10.8 kilograms per hour (kg/h). The heating zones 1 and 2 of the extruder were set at 100 °C, zone 3 at 112 °C, zones 4 to 6 at 150 °C, zones 7 to 12 at 130 °C, and zones 12 to 15 at 100 °C.

AcResin A250 was fed in the twin screw extruder in zone Z1 using two 20-liter drum unloaders from SM Klebetechnik operated at 140 °C. The tackifier Superester W115 was added in zone 2 with a loss in weight screw feeder available from Brabender. Vacuum (100 mbar) was applied in zone 10. Between the skin extruder and the die, the adhesive melt was metered by a gear pump (100 °C) through a heated hose (100 °C), which made the junction between the extruder and the die.

**Table 2: Composition of the Pressure-sensitive Skin Adhesive (in Weight Parts)**

| Materials | Skin 1 | Skin 2 | Skin 3 |
|---|---|---|---|
| AcResin A250 | 100 | 95 | 95 |
| Superester W115 | | 5 | 5 |
| Aerosil R972 | | | 6 |

### In-between foamed pressure-sensitive adhesive layer preparation ("core layer").

The foam core constructions described in Table 3 were compounded in a 30-mm co-rotating twin screw extruder (ZSK30 from Berstorff) having 23 heat zones and a L/D (length/diameter) ratio of 60. The core extruder was operated at 260 rpm with a throughput of 25 kg/h. The heating zone 1 was set at 45 °C, zones 2 to 3 were set at 100 °C, zones 4 to 7 at 150 °C, zones 8 to 10 at 130 °C, zone 11 at 110 °C, and zones 12 to 23 at 100 °C.

AcResin A250 was fed in zone 2 to the extruder using a 200-liter drum unloader operating at 140 °C. The tackifier Superester W115 and the activated carbon were fed in zone 1 using a loss in weight feeder from Brabender. The expandable microspheres were added in zone 12 using a loss in weight feeder from Brabender and a side stuffer from Berstorff operating at 200 rpm. Between the extruder and the die, the adhesive melt was metered by a gear pump (100 °C) through a heated hose (135 °C), which made the junction between the extruder and the die.

**Table 3: PSA Foam Core Composition (in Weight Parts)**

| Material | Core 1 | Core 2 | Core 3 | Core 4 |
|---|---|---|---|---|
| AcResin A250 | 100 | 95 | 100 | 100 |
| Superester W115 | | 5 | | |
| EMS FN100MD | 3.5 | 3.5 | 3.5 | 3.5 |
| Cabosil H5 | | | | 1 |
| Activated Carbon PGW-20MD | | | 4 | |

### Preparation of multilayer pressure-sensitive adhesive foam tapes.

3-layer co-extruded tapes were prepared by co-extruding first and second pressure-sensitive adhesive layers onto the opposing sides of the polymeric foam layer through a 3-layer multi manifold film die. The 3-layer co-extruded pressure-sensitive adhesive assembly was cast between a silicone coated polyester liner and a silicone-coated polyethylene liner. The chill rolls were cooled with water at a temperature of about 13 °C. The co-extruded pressure-sensitive adhesive assemblies were further crosslinked from both sides by e-beam radiation under an acceleration tension of 260 kV (kilo Volts) and a dose of 80 kGy (kilo Gray).

The resulting 3-layer foam tape had a total thickness of about 1000 µm (±50 µm).

### Test Results:

### VOC, FOG and 90° Peel Measurements:

The 3-layer foam tape samples were analyzed according to the 90° Peel and the VDA 278 Test Methods described above. The compositions and results are shown in Table 4 below.

**Table 4: VOC, FOG and 90° Peel Measurements**

| Examples | Composition | | Thickness | Density | VOC Content via VDA278 | FOG Content via VDA278 | 90° Peel Force on Stainless Steel |
|---|---|---|---|---|---|---|---|
| | Skin | Core | µm | g/cm3 | ppm | ppm | N/cm |
| Ex. 1 | 1 | 2 | 1000 | 0.59 | 25 | 65 | 9.8 |
| Ex. 2 | 2 | 1 | 1000 | 0.51 | 54 | 145 | 19.4 |
| Ex. 3 | 2 | 2 | 1000 | 0.5 | 297 | 1067 | 15.6 |
| Ex. 4 | 2 | 3 | 1000 | 0.52 | 61 | 131 | 33.6 |
| Ex. 5 | 3 | 1 | 1000 | 0.53 | n.d. | n.d. | 22.4 |
| Ex. 6 | 3 | 4 | 1000 | 0.52 | n.d. | n.d. | 22.5 |
| CE1 Tesa 7065 | n. d. | | 1200 | n. d. | 2540 | 7870 | n. d. |

As it can be seen from the results shown in Table 4, the 3-layer foam tapes according to the present disclosure (Ex. 1 to Ex. 6) are provided with reduced overall VOC and FOG levels, when compared to using a PSA composition not comprising a low molecular weight polymer (comparative example CE-1). Additionally, Ex. 4 showing an improved peel performance on stainless steel in combination with low VOC and FOG values, when using activated carbon in the PSA composition.

The complete disclosures of the patents, patent documents, and publications cited herein are incorporated by reference in their entirety as if each were individually incorporated. To the extent that there is any conflict or discrepancy between this specification as written and the disclosure in any document that is incorporated by reference herein, this specification as written will control. Various modifications and alterations to this disclosure will become apparent to those skilled in the art without departing from the scope and spirit of this disclosure. It should be understood that this disclosure is not intended to be unduly limited by the illustrative embodiments and examples set forth herein and that such examples and embodiments are presented by way of example only with the scope of the disclosure intended to be limited only by the claims set forth herein as follows.

## Claims

1. A multilayer pressure-sensitive adhesive foam tape comprising:
a pressure-sensitive adhesive polymeric foam layer having a first major surface and a second major surface, wherein the polymeric foam consists essentially of:
a poly(meth)acrylate derived from a (meth)acrylate-based (co)polymer component having a weight-average molecular weight (M_{w}) no greater than 500,000 g/mol and comprising at least one reactive functional group (X); and
an optional additive selected from the group consisting of a density-reducing solid filler, a tackifier, a VOC scavenger, an odor absorber, a stabilizer, a rheological modifier, a thixotropic compound, and a combination thereof;
a first pressure-sensitive adhesive skin layer adjacent the first major surface of the foam layer; and
a second pressure-sensitive adhesive skin layer adjacent the second major surface of the foam layer.

2. A multilayer pressure-sensitive adhesive foam tape comprising:
a pressure-sensitive adhesive polymeric foam layer having a first major surface and a second major surface, wherein the polymeric foam comprises:
a poly(meth)acrylate derived from a (meth)acrylate-based (co)polymer component having a weight-average molecular weight (M_{w}) no greater than 500,000 g/mol and comprising at least one reactive functional group (X); and activated carbon;
a first pressure-sensitive adhesive skin layer adjacent the first major surface of the foam layer; and
a second pressure-sensitive adhesive skin layer adjacent the second major surface of the foam layer.

3. A multilayer pressure-sensitive adhesive foam tape comprising:
a pressure-sensitive adhesive polymeric foam layer having a first major surface and a second major surface, wherein the polymeric foam comprises:
a poly(meth)acrylate derived from a (meth)acrylate-based (co)polymer component having a weight-average molecular weight (M_{w}) no greater than 500,000 g/mol and comprising at least one reactive functional group (X); and
a tackifier;
a first pressure-sensitive adhesive skin layer adjacent the first major surface of the foam layer; and
a second pressure-sensitive adhesive skin layer adjacent the second major surface of the foam layer.

4. The tape of any of claims 1 through 3 wherein the polymeric foam further includes a density-reducing solid filler.

5. The tape of claim 4 wherein the density-reducing solid filler is formed from expandable microspheres.

6. The tape of any of the previous claims wherein the (meth)acrylate-based (co)polymer component is present in the foam layer in an amount of 25 wt-% to 99.5 wt-%, based on the total weight of the foamable composition (prior to foaming).

7. The tape of any of the previous claims wherein the (meth)acrylate-based (co)polymer component comprises at least one functional group (X) selected from the group consisting of a carboxylic acid, a hydroxyl, an amine, an aziridine, an azetidine, a pyrrolidine, a piperidine, a carbodiimide, an isocyanate, an epoxide, an acid anhydride, an amide, and a combination thereof.

8. The tape of any of the previous claims wherein the (meth)acrylate-based (co)polymer component further comprises at least one free-radical curable functional group (Z), which is different from the at least one reactive functional group (X).

9. The tape of any of the previous claims wherein the (meth)acrylate-based (co)polymer component comprises the (co)polymerization reaction product of a (co)polymerizable material comprising:
(i) C₁-C₃₂ (meth)acrylic acid ester monomer units;
(ii) ethylenically unsaturated monomer units comprising the reactive functional group (X), and which is copolymerizable with monomer units (i); and
(iii) optionally, ethylenically unsaturated monomer units which are copolymerizable with monomer units (i) and/or (ii), and which comprise a free-radical curable functional group (Z).

10. The tape of claim 9 wherein the C₁-C₃₂ (meth)acrylic acid ester monomer units (i) are selected from the group consisting of C₁-C₂₅ (meth)acrylic acid ester monomer units, Ci-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, C₄-C₃₀ (meth)acrylic acid ester monomer units, C₄-C₁₄ (meth)acrylic acid ester monomer units, and C₄-C₉ (meth)acrylic acid ester monomer units.

11. The tape of claim 9 or 10 wherein the ethylenically unsaturated monomer units (ii) having the reactive functional group (X) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and a combination thereof.

12. The tape of any of claims 9 through 11 wherein the (meth)acrylate-based (co)polymer component comprises the (co)polymerization reaction product of a (co)polymerizable material comprising:
(i) C₁-C₃₂ (meth)acrylic acid ester monomer units;
(ii) ethylenically unsaturated monomer units comprising the reactive functional group (X), and which is copolymerizable with monomer units (i); and
(iii) ethylenically unsaturated monomer units which are copolymerizable with monomer units (i) and/or (ii), and which comprise a free-radical curable functional group (Z).

13. The tape of claim 12 wherein the ethylenically unsaturated monomer units (iii) are selected from the group consisting of C₁-C₁₈ (meth)acrylic acid ester monomer units.

14. The tape of any of the previous claims **characterized by** a VOC content of less than 500 ppm according to Test Method VDA278, a FOG content of less than 500 ppm according to Test Method VDA278, or both.

15. The use of the tape of any of the previous claims for industrial applications, particularly constructions market applications and transportation market applications, and electronic applications, particularly interior appliances.
